# DEMANDE DE BREVET EUROPEEN

(11) **EP 0 734 752 A1**
(43) Date de publication de la demande: **02.10.1996**
(21) Numéro de dépôt: 96420099.2
(22) Date de dépôt: 28.03.1996
(51) Int. Cl.: B01D 25/168

(54) **Installation de filtration en batterie pour le traitement des eaux chargées**

(30) Priorité: 30.03.1995 FR 9504079
(71) Demandeur: MS DEVELOPPEMENT ET PARTICIPATION S.A., 63171 Aubiere (FR)
(72) Inventeur: Guillaume, Jean-Paul, 63960 Veyre-Monton (FR); Maingot, Franck, 63000 Clermont-Ferrand (FR)
(74) Mandataire: Chanet, Jacques

(57) **Abrégé**

L'invention a pour objet une installation de filtration en batterie pour la séparation solide-liquide.

Cette installation, du genre comprenant une pluralité de plateaux (2) juxtaposés mécaniquement reliés (8) les uns aux autres, des moyens (4) de compression des plateaux, des moyens d'amenée d'eau chargée à l'intérieur des plateaux, et des moyens (20,24) d'écartement-rapprochement des plateaux pour libérer la charge collectée, est caractérisée en ce que les moyens de compression (4) sont des moyens de forte pression à faible course, tandis que les moyens d'écartement rapporchement (20,24) des plateaux (2) sont des moyens faibles pression et grande course, les plateaux (2) prenant appui sur le bâti (12) de l'installation à l'encontre des moyens de compression (4) grâce à des moyens d'appui escamotables (10,30).

Application au génie civil, traitement des eaux chargées notamment.

## Description

L'invention est du domaine des techniques de séparation solide-liquide, et elle a pour objet une installation de filtration en batterie, du genre filtre presse.

On connaît des installations du genre pour le traitement des eaux chargées, d'argile et/ou de boue par exemple, mettant en oeuvre un procédé consistant, dans un premier temps à faire circuler l'eau sous pression à travers une pluralité de filtres fonctionnant en parallèle pour soustraire la charge, puis dans un deuxième temps à interrompre la circulation d'eau pour retirer la charge collectée. D'une manière générale, ces machines comprennent un bâti et :
- une pluralité de plateaux juxtaposés supportant des moyens filtrants et délimitant un compartiment collecteur de charge,
- des moyens de compression des plateaux pour obtenir une étanchéité de la fermeture des compartiments, ou alternativement leur ouverture ; de façon courante, ces moyens sont constitués par des organes de puissance de type hydraulique, vérins notamment, pour comprimer les plateaux les uns contre les autres et contre une plaque d'appui solidaire du bâti.
- des moyens d'amenée d'eau chargée à l'intérieur de chacun des compartiments, lors d'une opération dite de "gavage", l'eau circulant sous pression à travers les moyens filtrants pour abandonner sa charge à l'intérieur des compartiments et former des "gâteaux" à partir de la charge collectée, et des moyens d'évacuation de l'eau filtrée,
- accessoirement des moyens d'essorage de la charge à l'intérieur des compartiments, lors d'une opération de pressage visant à compacter les "gâteaux" ; par exemple, ces moyens comprennent des vessies gonflables ménagées à l'intérieur des plateaux au moyen d'au moins une membrane, et
- des moyens d'écartement-rapprochement des plateaux, pour soit écarter les plateaux les uns des autres pour libérer la charge lors d'une opération dite de "débâtissage", soit les rapprocher pour effectuer un nouveau cycle de gavage.

Parmi les installations du genre, on peut en distinguer deux types, dont les structures diffèrent en fonction du nombre adéquat de plateaux à mettre en oeuvre:

Selon un premier type, plus particulièrement adapté à l'utilisation d'une pluralité importante de plateaux, les moyens pour écarter les plateaux les uns des autres sont constitués par des doigts séparateurs, séparant deux plateaux voisins et successivement tous les couples de plateaux de la pluralité.

Un inconvénient de ce type d'installation réside dans le temps important nécessaire pour écarter les plateaux ; un autre inconvénient réside dans une difficile et coûteuse automatisation de l'installation visant à permettre un fonctionnement autonome et non contrôlée par du personnel, notamment pour l'opération d'écartement des plateaux.

Selon un deuxième type, plus particulièrement adapté à l'utilisation d'un petit nombre de plateaux, les moyens pour écarter les plateaux sont constitués par les moyens de compression des plateaux, ceux-ci étant mécaniquement reliés les uns aux autres, par des chaînes notamment à la manière d'un accordéon, de telle sorte qu'une traction exercée sur l'un d'eux d'extrémité entraîne un déplacement des autres.

les inconvénients de ce type d'installation résident dans le fait que les moyens de compression, qui doivent fournir de hautes pressions pour assurer l'étanchéité des compartiments à l'encontre de la pression de l'eau les traversant, doivent d'autre part avoir une course suffisante, et de ce fait importante, pour écarter l'ensemble des plateaux les uns des autres et autoriser la chute des gâteaux ; ces dispositions entraînent en premier lieu un coût disproportionné des moyens de compression, au regard de chacune des fonctions qui lui sont attribuées, et en deuxième lieu un encombrement conséquent de l'installation par rapport au nombre de plateaux, en raison des longueurs cumulées nécessaire de la tige et du cylindre du vérin de compression des plateaux, ce qui finalement ne permet pas d'un point de vue économique l'utilisation de telles installations pour un nombre plus important de plateaux.

Par ailleurs, un inconvénient général de ce genre d'installation de filtration en batterie réside dans le fait que les moyens pour retirer les gâteaux sont du type par simple gravité, les gâteaux tombant naturellement dans un bac de récupération lors de l'écartement des plateaux; accessoirement, les installations peuvent être équipées de moyens pour décoller les gâteaux des plateaux, par projection d'air par exemple ; il en découle que même automatisées, ces installations nécessitent une présence humaine, notamment pour contrôler la chute des gâteaux.

On comprendra que les technologies qui sont mises en oeuvre pour chacune des installations sont dépendantes et adaptées au nombre de plateaux utilisés.

L'installation de l'invention relève du deuxième type, et le problème que cherche à résoudre l'invention, de même que le but général qui est visé, réside dans l'élaboration d'une installation d'un troisième type, permettant de traiter des liquides chargés en utilisant un nombre intermédiaire de plateaux, ce que, dans l'état de la technique connu de la demanderesse, aucune des technologies susvisées ne permet, tout en ramenant le coût des moyens de compression comparable à celui des moyens de compression des installations du premier type, voire d'un coût inférieur.

Un but secondaire de l'invention est de proposer des moyens simples pour décoller les gâteaux des plateaux.

Un autre but de l'invention est de proposer une installation dont la structure et les moyens mis en oeuvre permettent une fabrication à un prix compétitif, et autorisent une automatisation des différentes opérations permettant un fonctionnement de l'installation sans présence humaine.

La démarche inventive a consisté, à l'encontre des habitudes prises dans le domaine, à rendre distincts et indépendants les moyens de compression et les moyens d'écartement-rapprochement des plateaux, les moyens de compression étant des moyens de forte pression à faible course, tandis que les moyens d'écartement-rapprochement des plateaux sont des moyens de faible pression et grande course, l'installation étant pourvue de moyens d'appui escamotables des plateaux sur le bâti à l'encontre des moyens de compression.

Il résulte de ces dispositions que les plateaux peuvent être simultanément "débâtis" et que la course des moyens de compression est juste suffisante pour obtenir leur étanchéité après leur rapprochement par les moyens correspondants ; il en résulte finalement un coût de fabrication de l'installation compétitif et un encombrement de celle-ci minimal.

Selon un exemple préféré de réalisation, la dite pluralité de plateaux est intercalée entre deux plaques, dites respectivement de tête et de fond, les moyens de compression étant interposés entre une plaque, dite maîtresse, solidaire du bâti, et la plaque de tête ; les moyens d'écartement-rapprochement des plateaux sont des moyens de locomotion de la plaque de fond, à laquelle est mécaniquement relié le plateau d'extrémité correspondant, la dite plaque de fond, participant des dits moyens d'appui escomatables, étant temporairement solidarisable au bâti grâce à des moyens de verrouillage.

Selon une forme préférée de réalisation, les dits moyens de verrouillage comprennent des tirants reliés à la plaque maîtresse à l'une de leurs extrémités, et dotés à leur autre extrémité de moyens escamotables de crochetage sur la plaque de fond, de telle sorte que la poussée axiale exercée par les moyens de compression soit répercutée par les tirants contre la plaque maîtresse.

En d'autres termes et selon un autre aspect de l'invention, les dits moyens d'appui escamotables comprennent la plaque de fond, contre laquelle sont mis en appui les plateaux sous la poussée exercée par les moyens de compression, la dite plaque de fond étant solidarisable au moyen des tirants à la plaque maîtresse, participant du bâti et contre laquelle plaque maîtresse les moyens de compression exerce une contre-poussée.

De préférence, les dits moyens escamotables de crochetage sont constitués par un agencement des tirants en loquet, l'installation comportant de préférence des moyens de manoeuvre simultanée des tirants.

De préférence encore, les moyens d'écartement-rapprochement des plateaux sont des moyens du type à pignon-crémaillère.

Selon une forme avantageuse de réalisation, l'installation comporte en outre des moyens, dits de secouage, pour secouer les plateaux et induire de ce fait la chute des gâteaux hors des compartiments ; les dits moyens de secouage sont par exemple des moyens de type "à came", comprenant au moins une came articulée sur le bâti prenant, lors de l'opération de secouage, un appui glissant-échappant sous une oreille ménagée sur chacun des plateaux, ces derniers reposant naturellement par l'intermédiaire de la dite oreille sur une glissière, de telle sorte que, lors de l'opération de secouage, la came soulève les plateaux par appui glissant jusqu'à les échapper, ce qui induit une secousse aux plateaux lors de leur retombée sur la glissière.

Avantageusement, les moyens de compression sont constitués par au moins un vérin du type "à soufflet", ce qui est notamment rendu possible grâce à leur faible course autorisée par l'invention, et permet de réduire considérablement le coût de fabrication de l'installation.

La présente invention sera mieux comprise et des détails en relevant apparaîtront, à la description qui va en être faite d'une forme préférée de réalisation, en relation avec les figures des planches annexées, dans lesquelles :
les fig.1 à 3 sont des schémas de principe illustrant respectivement des installations de l'art antérieur et une installation de l'invention (fig.3),
les fig.4 et 5 sont des schémas en perspective illustrant une forme préférée de réalisation d'une installation de l'invention, respectivement en situation de gavage et en situation de débâtissage,
la fig.6 est une vue longitudinale d'une même installation,
les fig.7 à 10 sont des vues transversales d'une même installation, illustrant respectivement les moyens de secouage, les moyens de déplacements et de verrouillage de la plaque de fond, les moyens de compression, et les moyens de manoeuvre simultanée des moyens de verrouillage de la plaque de fond.

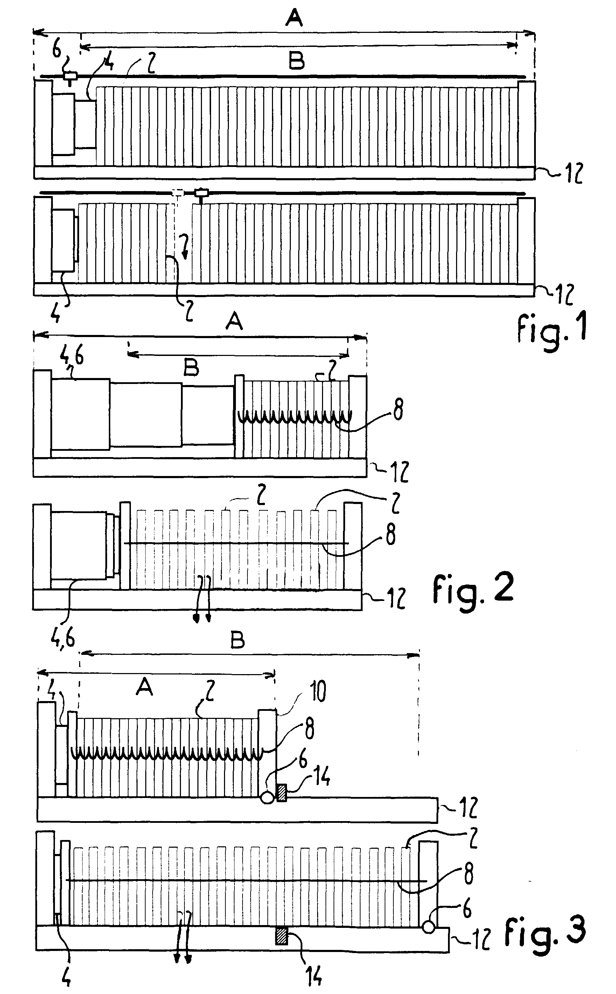

Sur les figures 1 à 3, des installations de filtration en batterie comprennent une pluralité de plateaux juxtaposés, tels que 2, des moyens 4 de compression des plateaux 2, et des moyens 6 d'écartement-rapprochement des plateaux 2.

Sur la fig.1 une installation d'un premier type est de préférence utilisée pour un nombre important de plateaux 2, de plusieurs dizaines à plus d'une centaine notamment. Les moyens 6 d'écartement-rapprochement des plateaux 2 sont constitués par un doigt séparateur mobile en translation séparant les plateaux 2 un à un, et les moyens 4 de compression sont constitués par un vérin hydraulique forte pression et de course relativement faible, mais néanmoins suffisante pour autoriser au moins un écartement entre deux plateaux 2 permettant la chute successive de leur gâteau respectif.

Sur la fig.2 une installation d'un deuxième type est de préférence utilisée pour un petit nombre de plateaux 2, de 3 à une trentaine notamment. Les moyens 4 de compression et les moyens 6 d'écartement-rapprochement des plateaux 2 sont confondus et sont constitués par un vérin hydraulique "forte pression" et à course importante, pour tirer ou pousser l'ensemble des plateaux 2 simultanément, lesquels sont mécaniquement reliés les uns autres, au moyen d'une chaîne 8 notamment.

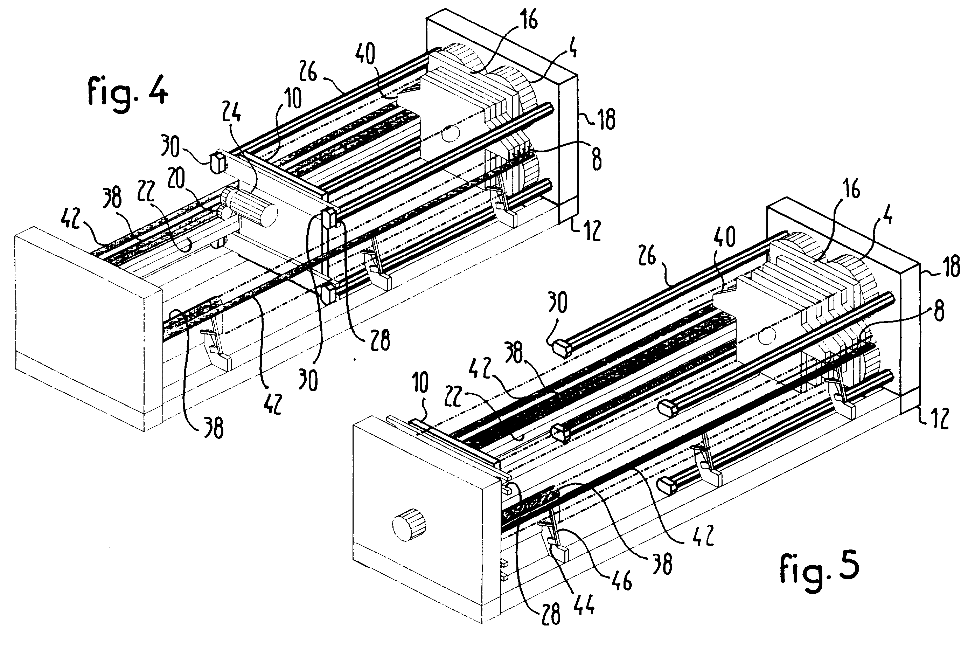

Sur la fig.3 une installation de l'invention est prévue et est élaborée pour un nombre de plateaux 2 intermédiaire par rapport aux précédentes installations, en raison du f ait que dans la pratique, le choix d'utiliser l'une ou l'autre des installations précédentes peut être rendu délicat en fonction du nombre de plateaux que l'on désire mettre en oeuvre. Les moyens 4 de compression et les moyens 6 d'écartement-rapprochement des plateaux 2 sont des moyens distincts : les moyens 6 d'écartement-rapprochement des plateaux 2 sont constitués par leur liaison mécanique entre eux et par des moyens de locomotion d'une plaque 10, dite de fond, à laquelle les plateaux 2 sont reliés et contre laquelle prennent appui les plateaux 2 sous la poussée des moyens 4 de compression, la dite plaque de fond 10 étant temporairement solidarisable (14) au bâti 12 de l'installation pendant l'opération de gavage ; grâce à ces dispositions, les moyens 4 de compression sont constitués par au moins un vérin de très faible course.

Il appert que l'on pourra entre autre reconnaître une installation de l'invention :
1.- grâce aux moyens 4 de compression utilisés, ceux-ci pouvant être avantageusement constitués :
   - par au moins un vérin de course juste suffisante pour presser les plateaux 2 après leur mise en contact les uns contre les autres par les moyens 6 de rapprochement écartement des plateaux 2,
   - ou encore par plusieurs vérins basse pression, (l'ensemble des vérins formant néanmoins conjointement des moyens de compression forte pression) ceux-ci pouvant être des vérins pneumatiques de type à soufflet.
2.- à la présence d'un châssis globalement divisé en deux zones A et B, une première zone A dans laquelle s'exercent les contraintes induites par la poussée fournie par les moyens 4 de compression, et une deuxième zone B prolongeant la première A, dans laquelle les plateaux 2 sont guidés en écartement-rapprochement lors des opérations de débâtissage-bâtissage, la dite deuxième zone comprenant un espace non compris dans l'espace délimité par la zone A. En d'autres termes et en confrontant les fig.1 à 3, il apparaît sur les fig.1 et 2 et à la différence de l'exemple d'une installation de l'invention schématisée sur la fig.3, que les zones correspondantes A et B sont toutes deux comprises dans un même espace délimité par la zone A.

Sur les fig.4 et 5 d'une part, et 7 à 10 d'autre part, les plateaux 2 sont intercalés entre une plaque de tête 16 et une plaque de fond 10, les moyens 4 de compression étant quant à eux interposés entre la plaque de tête 16 et une plaque maîtresse 18 solidaire du bâti 12. Les moyens 6 d'écartement-rapprochement des plateaux 2 sont constitués par une liaison mécanique des plateaux 2 entre eux au moyen de chaînes 8, et par des moyens 20,22,24 de locomotion de la plaque de fond 10 à laquelle est relié le plateau 2 d'extrémité correspondant.

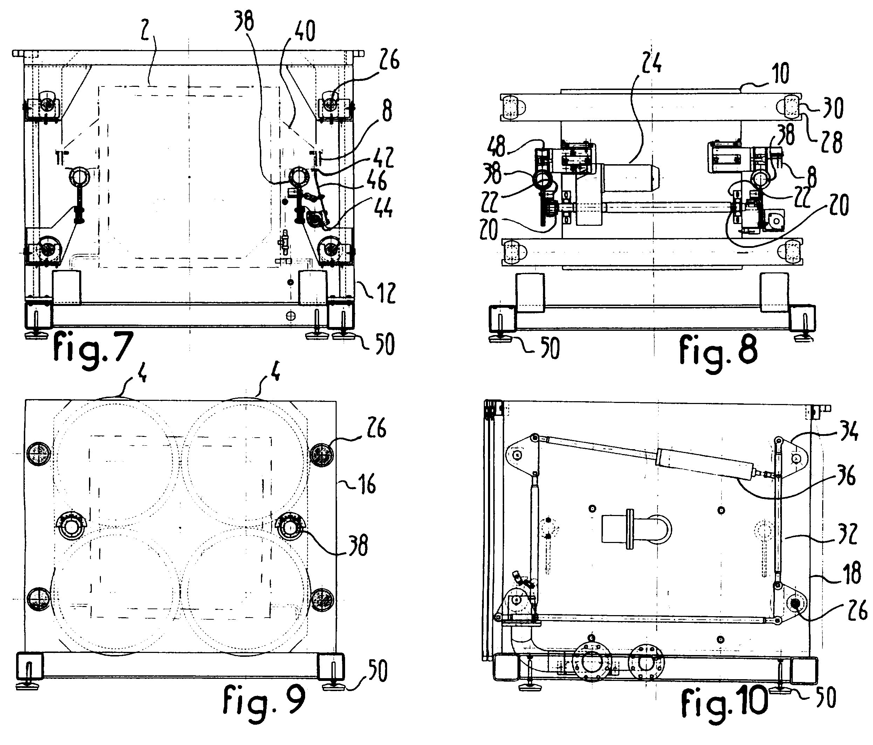

Les moyens de locomotion sont constitués par des moyens du type pignon 20 - crémaillère 22, un moteur réducteur 24 étant fixé sur la face arrière de la plaque de fond 10, et coopérant par l'intermédiaire d'une pignonerie 20 avec une crémaillère 22 supportée par le bâti 12. Cette forme de réalisation n'est que préférée, et pourrait être remplacée par tout autre moyen équivalent sans déroger à la règle générale de l'invention. On remarquera sur la fig.8 la présence de galets 48 de guidage de plaque de fond 10 le long de glissières 38 soutenant les plateaux 2.

La plaque de fond 10 est temporairement solidarisable au bâti 12 grâce à des tirants, tels que 26, la reliant à la plaque maîtresse 18, de telle sorte que cette dernière 18 supporte, lors de l'opération de gavage, non seulement la contre poussée des moyens de compression 4 qui prennent appui contre la plaque maîtresse 18, mais aussi la poussée qu'ils exercent contre les plateaux 2 par l'intermédiaire des tirants 26.

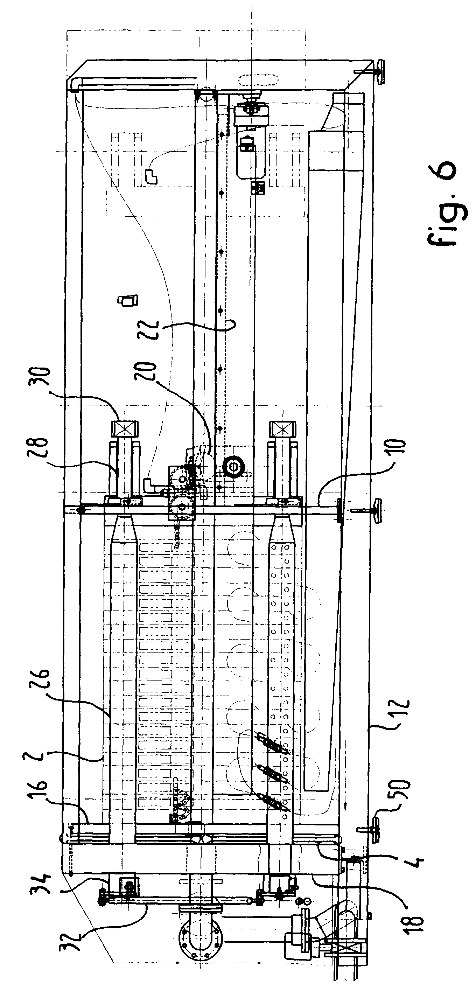

Les tirants 26 sont agencés en loquets rotatifs : la plaque de fond 10 comporte des lumières oblongues 28, autorisant le passage de la tête 30 des tirants 26 lors de l'opération de débâtissage, et permettant néanmoins un appui des tirants 26 contre la face arrière de la plaque de fond 10 lors de l'opération de gavage. L'installation comporte des moyens, 32,34,36 de manoeuvre simultanée des tirants 26, représentés sur les fig.6 et 10, constitués par un dispositif de bielles 32 - manivelles 34 manoeuvrable par un vérin 36.

Dans une variante équivalente non représentée sur les figures, les tirants pourraîent coulisser dans des alésages de la plaque maîtresse pour être tirés depuis l'arrière de cette plaque par une autre plaque, qui serait alors équivalente à la dite plaque de tête, la dite autre plaque supportant les moyens de manoeuvre en rotation des tirants et recevant l'effort des moyens de compression, les plateaux étant dès lors compressés entre la plaque maîtresse et la plaque de fond.

L'installation comporte des moyens 42,44,46 de secouage, pour impulser une secousse aux plateaux 2 après leur débâtissage, en vue de provoquer de façon certaine la chute des gâteaux hors des compartiments délimités par les plateaux 2. Ces moyens de secouage sont de type à "came", dont un exemple de réalisation est schématisé sur les fig.4 et 5, et représenté sur la fig.7 : Les plateaux 2 reposent naturellement sur des glissières 38 latérales supportées par le bâti 12 par l'intermédiaire d'oreilles 40 dont ils sont pourvus. Au moins un longeron 42 latéral aux plateazux 2 est maintenu en dessous des oreilles 40 par un ensemble de bielles, telles que 44 et 46, articulées sur le bâti 12, de telle sorte que le longeron 42 puisse prendre un appui glissant sous les oreilles 40 des plateaux 2 pour soulever ces derniers 2, puis les échapper, la retombée brutale des plateaux 2 sur les glissières 38 leur impulsant une secousse induisant la chute des gâteaux. On remarquera que le longeron 42 peut être présent de chaque côté des plateaux 2, tel qu'illustré sur les fig.4 et 5, ou alternativement être présent d'un seul côté des plateaux 2, tel qu'illustré sur la fig.7.

On notera que grâce à l'ensemble des dispositions prises, l'installation de l'invention peut être totalement automatisée de manière à pouvoir fonctionner sans présence humaine, notamment pour le contrôle de la chute des gâteaux.

On remarquera enfin sur les fig.6 à 10 la présence de patins 50 sur lesquels repose l'installation afin de lui conférer une bonne assiette au sol; on notera par ailleurs que l'installation est avantageusement pourvue de moyens de préhension (non représentés sur les figures), pour permettre son soulèvement en vue de faciliter son transport et/ou de son déplacement d'un site à un autre.

Bien que l'on ait décrit et représenté une forme préférée de réalisation de l'invention, il doit être compris que la portée de cette dernière n'est pas limitée à cette forme, mais qu'elle s'étend à toute installation comportant les caractéristiques énoncées plus haut.

## Revendications

1. Installation de filtration en batterie pour la séparation solide-liquide, et notamment pour le traitement d'eaux chargées, du genre d'installation comprenant un bâti (12) équipé :
- d'une pluralité de plateaux (2) juxtaposés supportant des moyens filtrants et délimitant un compartiment collecteur de charge, les dits plateaux (2) étant mécaniquement reliés (8) les uns aux autres de telle sorte qu'une traction exercée sur l'un d'eux d'extrémité entraîne un déplacement des autres,
- de moyens (4) de compression des plateaux (2) les uns contre les autres pour obtenir une étanchéité de fermeture des compartiments, ou alternativement leur ouverture,
- de moyens d'amenée d'eau chargée à l'intérieur de chacun des compartiments, lors d'une opération dite de "gavage", l'eau circulant sous pression à travers les moyens filtrants pour abandonner sa charge à l'intérieur des compartiments et former des "gâteaux" à partir de la charge collectée, et de moyens d'évacuation de l'eau filtrée,
- accessoirement de moyens d'essorage de la charge à l'intérieur des compartiments, lors d'une opération dite de "pressage" visant à compacter les "gâteaux",
- de moyens (6) d'écartement-rapprochement des plateaux (2) pour, soit écarter les plateaux (2) les uns des autres pour libérer la charge lors d'une opération dite de "débâtissage", soit les (2) rapprocher pour effectuer un nouveau cycle de gavage, les dits moyens (6) d'écartement-rapprochement des plateaux (2) comprenant les dits moyens (8) de liaison mécanique des plateaux (2) entre eux, caractérisée :
en ce que les moyens (4) de compression et les moyens (6) d'écartement-rapprochement des plateaux (2) sont des moyens distincts et indépendants, les moyens (4) de compression étant des moyens de forte pression à faible course, tandis que les moyens (6) d'écartement-rapprochement des plateaux sont des moyens de faible pression et grande course, et
en ce qu'elle comporte des moyens d'appui escamotables (10,26,28,30,20,22,24,48,38) des plateaux (2) sur le bâti (12) à l'encontre des moyens (4) de compression ;

2. Installation selon la revendication 1, caractérisée :
en ce que la dite pluralité de plateaux (2) est intercalée entre deux plaques, dites respectivement de tête (16) et de fond (10),
en ce que les moyens (4) de compression sont interposés entre une plaque (18), dite maîtresse, solidaire du bâti (12), et la plaque (18) de tête, et
en ce que les moyens (6) d'écartement-rapprochement des plateaux (2) sont des moyens (20,22,24,38,48) de locomotion de la plaque de fond (10), à laquelle est mécaniquement relié le plateau (2) d'extrémité correspondant, la dite plaque de fond (10), participante des dits moyens d'appui escomatables, étant temporairement solidarisable au bâti (12) grâce à des moyens (26,28,30,32,34,36) de verrouillage ;

3. Installation selon la revendication 2, caractérisée :
en ce que les dits moyens de verrouillage comprennent des tirants (26) reliés à la plaque maîtresse (18) à l'une de leurs extrémités, et dotés à leur autre extrémité de moyens (30) escamotables de crochetage sur la plaque de fond (10),
de telle sorte que la poussée axiale exercée par les moyens (4) de compression soit répercutée par les tirants (26) contre la plaque maîtresse (18) ;

4. Installation selon la revendication 3, caractérisée :
en ce que les dits moyens escamotables de crochetage sont constitués par un agencement des tirants (26) en loquet rotatif (28,30) ;

5. Installation selon la revendication 4, caractérisée :
en ce qu'elle comporte des moyens (32,34,36) de manoeuvre simultanée des tirants (26) ;

6. Installation selon la revendication 1, caractérisée :
en ce que les moyens (6) d'écartement-rapprochement des plateaux sont des moyens du type à pignon (20)- crémaillère (22) ;

7. Installation selon la revendication 1, caractérisée :
en ce qu'elle comporte en outre des moyens (42,44,46), dits de secouage, pour secouer les plateaux (2) et induire la chute des gâteaux hors des compartiments ;

8. Installation selon la revendication 7, caractérisée :
en ce que les dits moyens de secouage sont des moyens de type "à came", comprenant au moins une came (42,44,46) articulée sur le bâti (12) prenant, lors de l'opération de secouage, un appui glissant-échappant sous une oreille (40) ménagée sur chacun des plateaux (2), ces derniers (2) reposant naturellement par l'intermédiaire de la dite oreille (40) sur une glissière (38),
de telle sorte que, lors de l'opération de secouage, la came (42,44,46) soulève les plateaux (2) par appui glissant jusqu'à les échapper, ce qui induit une secousse aux plateaux lors de leur retombée sur la glissière (38) ;

9. Installation selon la revendication 1, caractérisée :
en ce que les moyens (4) de compression sont constitués par au moins un vérin du type "à soufflet".
